Europäisches Patentamt

European Patent Office

Office européen des brevets

(11) Veröffentlichungsnummer: **0 315 037**
**A1**

## EUROPÄISCHE PATENTANMELDUNG

(21) Anmeldenummer: 88117814.9

(22) Anmeldetag: 26.10.88

(51) Int. Cl.⁴: **A47J 31/06**

(30) Priorität: 31.10.87 DE 3737029

(43) Veröffentlichungstag der Anmeldung:
**10.05.89 Patentblatt 89/19**

(84) Benannte Vertragsstaaten:
**CH FR LI SE**

(71) Anmelder: **EMIDE-METALLINDUSTRIE Gebr.
Streicher**

**D-7209 Denkingen(DE)**

(72) Erfinder: **Streicher, Willy
Klippenstrasse 2
D-7209 Denkingen(DE)**
Erfinder: **Schaub, Klaus
Lange Steige 1
D-7211 Frittlingen(DE)**

(74) Vertreter: **Patentanwälte Kohler - Schwindling
- Späth
Hohentwielstrasse 41
D-7000 Stuttgart 1(DE)**

(54) Filterbecher für Kaffeemaschinen.

(57) Die Erfindung betrifft einen Filterbecher. Sie besteht darin, daß er zwei Ausflußvorrichtungen (7, 17) aufweist, von denen die eine (7) einen geringeren Durchflußquerschnitt und eine Einlaßöffnung (15) in unmittelbarer Nähe des Becherbodens (4) aufweist und von denen die andere Auslaufvorrichtung (17) einen größeren Durchflußquerschnitt und eine Einlaßöffnung in einem Abstand oberhalb der Einlaßöffnung (15) der ersten Auslaufvorrichtung aufweist, wobei der Durchlaufquerschnitt der ersten Auslaufvorrichtung so klein ist, daß sich die Flüssigkeitssäule zwischen Filterpapier und Behälterwand so langsam absenkt, daß die Flüssigkeitssäule im Filterpapier bei bestimmter minimaler Kaffeemenge eine hinreichend lange Zeit mit dem Kaffeemehl in Berührung bleibt.

Fig.1

## Filterbecher für Kaffeemaschinen

Die Erfindung bezieht sich auf einen Becher zur Aufnahme des Filterpapieres bei einer Kaffeemaschine.

Bekannte, meist trichterförmige Filterbecher weisen an ihrem Boden eine Öffnung auf, durch die der filtrierte Kaffee in das darunterliegende Gefäß fließt. Ist jedoch in dem Filterbecher nur wenig Kaffeemehl vorhanden, so bleibt das zulaufende Kaffeewasser nicht lange genug mit dem Kaffeemehl in Berührung, sondern fließt zu schnell ab. Die Öffnung im Boden des Bechers kann aber nicht beliebig klein gemacht werden, weil sie so groß sein muß, daß sie bei mit Wasser gefülltem Filterbecher so viel Kaffee abfließen läßt, wie die Kaffeemaschine in den Filterbecher zuführt und das Filterpapier bei vollem Filterbecher durchläßt. Sonst läuft der Filterbecher bei der Aufbereitung einer Kaffeemenge, die das Volumen des Filterbechers erheblich übersteigt, über. Um jedoch beim Aufbrühen von wenig Kaffee das Kaffeewasser länger mit dem wenigen Kaffeemehl im Filter in Berührung zu halten, ist es, z.B. durch die US- PS 4,527,467, bekannt, in dem unteren Teil des Filterbechers einen der Auslauföffnung vorgeschalteten Saugheber vorzusehen, der den Kaffee erst dann in das darunter gestellte Gefäß ausfließen läßt, wenn der Flüssigkeitsspiegel zwischen dem Filterpapier und der Innenwand des Bechers die Scheitelhöhe des Saughebers erreicht hat.

Wenn der Flüssigkeitsspiegel in dem Raum zwischen Innenfläche des Bechers und Filterpapier unter die Ansaugöffnung des Saughebers absinkt, so zieht der Saugheber Luft an und entleert sich, die Kaffeezufuhr in das darunter liegende Gefäß hört auf. Damit wird beim Benutzer der Anschein erweckt, im Filter würde sich keine Flüssigkeit mehr befinden. Wenn jedoch innerhalb des Filterpapiers sich noch Wasser befindet, so tritt dies durch das Filter hindurch wieder in den Zwischenraum zwischen Filterpapier und Becherwand und baut hier wieder eine Flüssigkeitssäule auf. Erreicht diese Säule wieder die Scheitelhöhe des Saughebers, so beginnt der Saugheber wieder zu arbeiten und er läßt wieder Kaffee durch die Bodenöffnung des Filterbechers fließen. Hat jedoch der Benutzer in diesem Augenblick den Filterbecker bereits von dem den Kaffee aufnehmenden Gefäß abgesetzt, so läuft der Kaffee ungenutzt aus.

Zwar sind in einem durch die DE-PS 856 693 bekannten Filterbecker im Boden mehrere Ausflußöffnungen für den Kaffee vorgesehen, die aber alle in der gleichen Ebene liegen. Auch ist durch die DE-OS 26 45 885 eine Tee-Filtervorrichtung bekannt geworden, bei der ein hohler Stab dichtend in eine am Boden des Filterbechers befindliche Ausflußöffnung einsteckbar ist. Bei eingestecktem Stab liegen in der Stabwand vorgesehen Öffnungen knapp unterhalb des oberen Randes des Filterbechers und bilden so eine Überlaufsicherung. Ist die Flüssigkeit lange genug im Filterbecher den Teeblättern ausgesetzt, wo wird der Stab herausgezogen und der Tee läuft durch die untere Auslauföffnung aus. Bei dieser Filtervorrichtung sind daher nur entweder die Überlauföffnungen im Stab oder aber die untere Auslauföffnung im Becherboden benutzbar.

Diese bekannten Filtervorrichtungen eignen sich jedoch nicht zur Lösung des vorgenannten Problems, das bei Kaffeefiltern mit Saughebern auftritt.

Der Erfindung liegt daher die Aufgabe zugrunde, den vorgenannten Nachteil des Nachtropfens des Filters zu vermeiden, wie er bei Filterbechern mit Saugheber auftritt.

Die Erfindung geht aus von einem Filterbecher mit zwei Ausflußvorrichtungen und besteht darin, daß eine erste Ausflußvorrichtung einen geringeren Durchflußquerschnitt und eine Einlaßöffnung in unmittelbarer Nähe des Becherbodens aufweist, die den Kaffee am Boden des Filterbechers abfließen läßt, und daß eine zweite Ausflußvorrichtung einen größeren Durchflußquerschnitt als die erste Ausflußvorrichtung und eine Einlaßöffnung in einem Abstand oberhalb der Einlaßöffnung der ersten Ausflußvorrichtung aufweist, wobei der Durchflußquerschnitt der ersten Ausflußvorrichtung so klein ist, daß sich die Flüssigkeitssäule zwischen Filterpapier und Behälterwand so langsam absenkt, daß die Flüssigkeitssäule im Filterpapier bei bestimmter minimaler Kaffeemenge eine hinreichend lange Zeit mit dem Kaffeemehl in Berührung bleibt.

Dabei kann bei einer Auführungsform ..............-
(Fortsetzung Seite 3, Zeile 7 der ursprünglichen Unterlagen)

Dabei kann bei einer Ausführungsform der Erfindung die Einlaßöffnung der zweiten Abflußvorrichtung in derjenigen Höhe über dem Becherboden angeordnet sein, die der Flüssigkeitsspiegel beim Aufbrühen von etwa zwei Tassen Kaffee im Filterbecher maximal einnimmt. Schließlich ist bei einer Ausführungsform der Querschnitt der beiden Abflußöffnungen zusammengenommen so groß, daß er bei vollem Filterbecher eine der Menge des zuströmenden Kaffeewassers entsprechende Menge Kaffee abführen kann.

Der Vorteil der Erfindung liegt darin, daß der Querschnitt der ersten Abflußöffnung so klein gemacht werden kann, daß er dann, wenn lediglich eine kleine Menge Kaffee, beispielsweise eine oder zwei Tassen, aufgebrüht werden soll, der Kaffee vom Boden des Filterbechers so langsam abfließt, daß die Flüssigkeitssäule im Filterbecher eine hinreichend lange Zeit mit dem Kaffeemehl in Berührung bleibt, u.a. also nur so viel Kaffee abgesaugt wird, daß der Flüssigkeitsspiegel in dem Zwischenraum zwischen dem Filterpapier und der Becherwand nicht in den Bereich der Einlaßöffnung absinkt, solange sich noch Flüssigkeit im Filter befindet.

Dann tritt auch keine Unterbrechung des Flüssigkeitsaustrittes am Boden des Filterbechers ein, solange noch Flüssigkeit im Filterbecher sich befindet. Demgegenüber kann der Einlaßquerschnitt der zweiten Ausflußvorrichtung in einer nahezu beliebigen Höhe über dem Becherboden angeordnet sein, etwa in einer Höhe den der Flüssigkeitsspiegel beim Aufbrühen von etwa zwei Tassen Kaffee im Filterbecher maximal einnimmt.

Wird für die erste Ausflußvorrichtung ein Saugheber verwendet, so soll die Einlaßöffnung der zweiten Ausflußvorrichtung oberhalb des Scheitels des Saughebers liegen. Die obere Grenze der Lage dieser Einlaßöffnung ist durch die Forderung bestimmt, daß der durch diese Öffnung abfließende Kaffee hinreichend lange mit dem Kaffeemehl in Berührung gewesen sein soll.

Da der Durchlaßquerschnitt der zweiten Ausflußvorrichtung größer ist als der Durchflußquerschnitt der ersten Ausflußvorrichtung, so bewirkt die zweite Ausflußvorrichtung einen schnelleren Abfluß des Kaffees, wenn größere Mengen Kaffee aufgebrüht werden sollen. Der Abfluß des Kaffees aus dem Filter erfolgt dann solange relativ schnell, solange der Flüssigkeitsspiegel in dem Raum zwischen Filterpapier und Becherwand höher liegt als die Öffnung der zweiten Ausflußvorrichtung. Insbesondere kann der Durchflußquerschnitt der zweiten Ausflußvorrichtung so groß sein, daß die Querschnitte der ersten Ausflußvorrichtung und der zweiten Vorrichtung zusammen so groß sind, daß sie bei vollem Filterbecher eine der Menge des zuströmenden Kaffeewassers entsprechende Menge Kaffee abführen können. Dies erfolgt solange, bis der Flüssigkeitsspiegel in dem Zwischenraum zwischen Filterpapier und Becherwand soweit abgesunken ist, daß er unterhalb der Einlaßöffnung der zweiten Ausflußvorrichtung abgesunken ist. Der Durchflußquerschnitt der zweiten Ausflußvorrichtung kann aber auch größer sein. Sinkt infolgedessen die Flüssigkeitssäule im Zwischenraum schneller ab als die Flüssigkeitssäule innerhalb des Filterpapieres, so wird dadurch das Ausfließen des Kaffees aus dem Filterbecher nicht unterbrochen, da durch die erste Ausflußvorrichtung nach wie vor Kaffee ausfließt. Baut sich dann durch das durch das Filterpapier hindurchtretende Wasser wieder eine Flüssigkeitssäule im Zwischenraum auf, deren Flüssigkeitsspiegel oberhalb der Einlaßöffnung der zweiten Ausflußvorrichtung liegt, so beginnt der Kaffee zusätzlich auch durch die zweite Ausflußvorrichtung abzufließen, ohne daß hierdurch das Ausfließen des Kaffeewassers unterbrochen worden wäre.

Bei einer Ausführungsform der Erfindung besteht die erste Ausführungsform in an sich bekannter Weise aus einer Öffnung im Filterboden. Bei einer anderen Ausführungsform der Erfindung besteht die erste Ausflußvorrichtung in an sich bekannter Weise aus einem Saugheber. Dies hat den Vorteil, daß bei unter den Scheitel des Saughebers abgesunkenem Flüssigkeitsspiegel im Filter das Ausfließen des Kaffees beendet wird und das Filter nicht "nachtropft".

Bei Ausführungsformen der Erfindung kann die zweite Ausflußvorrichtung aus einem einfachen Überlaufrohr bestehen oder aber ebenfalls aus einem Saugheber. Der Filterbecher kann daher je nach Bedarf Ausflußvorrichtungen in verschiedener Zusammensetzung aufweisen. Besteht die erste Ausflußvorrichtung jedoch aus einem Saugheber, so muß darauf geachtet werden, daß seine Scheitelhöhe nicht höher ist als der Flüssigkeitsspiegel im Papierfilter bei Beginn des Aufbrühens der gewünschten minimalen Kaffeemenge.

Es ist nicht unbedingt erforderlich, daß die vorgenannten optimalen Bedingungen eingehalten werden. Immer, wenn der Durchflußquerschnitt der ersten Ausflußvorrichtung, die ihre Einlaßöffnung am Becherboden hat, kleiner ist als der Durchflußquerschnitt der zweiten Auslaufvorrichtung, deren Einlaßöffnung in einem Abstand oberhalb des Becherbodens angeordnet ist, lassen sich vorteilhafte Ausführungsformen der Erfindung konstruieren. Allerdings läßt sich das Unterbrechen des Ausfließens des Kaffees bei geringen Kaffeemengen nur dann verhindern, wenn der Durchflußquerschnitt der ersten Ausflußvorrichtung so klein ist, daß die Flüssigkeitssäule im Zwischenraum zwischen Filterpapier und Becherwand nicht schneller abfließt als bei den geringen Flüssigkeitsmengen Flüssigkeit durch das Filterpapier hindurchtritt.

Bei Ausführungsformen der Erfindung weist der Saugheber eine an der Becherwand vorgesehene Röhre auf, die durch den Becherboden hindurchragt. An ihrer Außenwand weist die Röhre eine U-förmige Ausbildung mit abstehenden Schenkeln auf. Über die Röhre und die Schenkel ist eine Haube geschoben, die die Schenkel zu einem Rohr ergänzt, deren obere Öffnung die Röhre mit Abstand übergreift und deren unteres Ende die Einlaßöffnung begrenzt, so daß diese Einlaßöffnung durch den Abstand des unteren Endes der Haube von dem Becherboden gebildet wird.

Bei einer anderen Ausführungsform der Erfindung ist am unteren Endabschnitt der Röhre die Einlaßöffnung vorgesehen. Diese Ausführungsform der Erfindung hat den Vorteil, daß Hauben mit verschieden großer Einlaßöffnung und/oder mit Einlaßöffnung mit verschiedener Höhe vorgesehen werden können. Durch Wahl einer geeigneten Haube kann dann der Saugheber verschiedenen Betriebsbedingungen und/oder verschiedenen Größen und Typen des Filterbechers angepaßt werden.

Weitere Merkmale der Erfindung ergeben sich aus der folgenden Beschreibung einer Ausführungsform der Erfindung in Verbindung mit den Ansprüchen und der Zeichnung. Die einzelnen Merkmale können je für sich oder zu mehreren bei Ausführungsformen der Erfindung verwirklicht sein.

Fig. 1 zeigt eine Ausführungsform der Erfindung in einem senkrechten Schnitt durch den Filterbecher ohne Filterpapier.

Fig. 2 zeigt einen waagerechten Schnitt entlang der Linie II-II in Fig. 1.

Fig. 3 zeigt einen Schnitt rechtwinklig durch die Längsachse eines Saughebers bei abgezogener Haube in vergrößertem Maßstab.

Fig. 4 zeigt ebenfalls in vergrößertem Maßstab zum Verständnis der Erfindung wesentliche Teile einer weiteren Ausführungsform in einem der Fig. 1 entsprechenden Schnitt.

Fig. 5 zeigt eine der Fig. 4 entsprechende Darstellung einer dritten Ausführungsform.

Fig. 6 zeigt eine vierte Ausführungsform in der Darstellung wie Fig. 4.

Fig. 7 zeigt vergrößert eine Ausführungsform, bei der zwei Saugheber zu einer Einheit zusammengefaßt sind.

Fig. 8 zeigt eine Einzelheit.

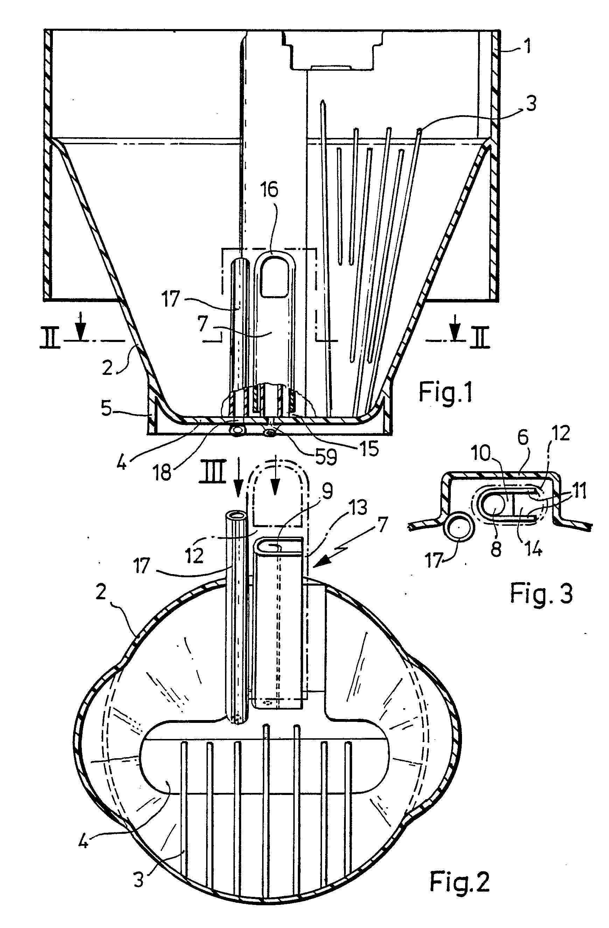

Bei der in den Fig. 1 bis 3 dargestellten Ausführungsform der Erfindung weist ein Filterbecher in an sich bekannter Weise einen zylindrischen Teil 1 auf, dessen oberer Rand eine Aussparung aufweist zum Einführen des Armes der Kaffeemaschine, mit dem das Kaffeewasser zugeführt wird. Etwa in der Mitte des hohlzylindrischen Teiles 1 ist der trichterförmige Abschnitt 2 des Filterbechers angespritzt, an dessen Innenwand Längsrippen 3 angeordnet sind. Der zylindrische Teil weist einen Boden 4 und einen in der Nähe des Boden 4 angeordneten ringförmigen Rohrabschnitt 5 auf, der den Boden 4 nach unten überragt und dessen Stirnseite den Fuß des Filterbechers bildet. Zumindest im unteren Abschnitt des zylindrischen Teils des Filterbechers befindet sich in der Becherwand eine Ausbuchtung 6, die einen Saugheber 7 aufnimmt, der sich parallel zur Wand vom Boden 4 nach oben erstreckt. Dieser Saugheber weist einen Rohrabschnitt 8 auf, der in dem Filterbecher so weit nach oben ragt, daß sein oberes Ende 9 in einer Höhe endet, die in einem kleinen Abstand, beispielsweise 3 mm bis 1 cm unter der Höhe liegt, die eine minimale Flüssigkeitsmenge einnimmt, die mindestens vorhanden sein muß, um die Kaffeemaschine in Betrieb zu setzen und die je nach Größe des Filters und Größe der Kaffeemaschine ein bis zwei Tassen Kaffee betragen kann. Seitlich an dem Rohr 8 ist eine im Querschnitt u-förmige Leiste 10 befestigt, deren Schenkel 11 vom Rohr 8 hinwegragen. Die Schenkel 11 können auch für sich allein als Streifen an die Wand des Rohres 8 angespitzt sein oder aber kann der nach außen offene, u-förmige Querschnitt dadurch gebildet sein, daß eine u-förmige Leiste seitlich auf das Rohr 8 aufgeschoben ist, so daß diese Leiste auch das Rohr 8 umfaßt, wobei deren Schenkel über das Rohr 8 hinausstehen. Das untere Ende des Rohres ist mit dem Randabschnitt einer Aussparung 59 fest verbunden, die den Boden 4 durchsetzt.

Über das Rohr 8 und die Schenkel 11 ist eine Haube 12 aufschiebbar, die in Fig. 2 gestrichelt dargestellt ist und die das Rohr 8 und die Schenkel 11 umfaßt derart, daß die Schenkel 11 zusammen mit der Wand 13 der Haube einen geschlossenen Kanal bilden. Die Haube umgibt die obere Stirnfläche 9 in einem Abstand, der dem Durchflußquerschnitt des Rohres 8 entspricht, so daß zwischen der Innenstirnfläche der Haube und der Stirnfläche 9 des Rohres 8 eine Verbindung zwischen dem Rohr 8 und dem Kanal 14 entsteht, der durch die Schenkel 11 und Rohrwand 13 gebildet ist. Die Haube 7 endet unten in einem Abstand von der Innenfläche des Becherbodens 7, so daß die untere Stirnfläche der Haube den Rand einer Einlaßöffnung 15 bildet, durch die die zwischen Filterpapier und Innenwand des Becherteils 2 befindliche Flüssigkeit abgesaugt werden kann, sobald die Flüssigkeit im Filter höher steht als die obere Stirnfläche 9 des Rohres 8.

Die Haube 7 weist oben einen Bügel 16 auf, der als Handgriff zum Abziehen der Haube dient, wenn der Saugheber gereinigt werden soll.

Neben dem Saugheber 7 ist eine Überlaufrohr 17 im Behälterboden befestigt, das ebenfalls entlang der Wand des trichterförmigen Teiles 2 nach oben ragt und dessen oberes Ende höher liegt als die Stirnfläche 9 des Rohres 8. Das untere Ende des Überlaufrohres 17 ist durch den Boden 4 hindurchgeführt. Der Durchflußquerschnitt des Überlaufrohres 17 ist größer als der wirksame Durchfluß-Querschnitt des Saughebers 7. Der Durchmesser der Öffnung 18 in Boden 4, auf dessen Rand das Überlaufrohr 17 aufsitzt, entspricht dem Durchmesser des Übelaufrohres 17. Der Saugheber 7 bildet eine erste Auslaufvorrichtung mit geringem Durchflußquerschnitt, das Überlaufrohr 17 bildet eine zweite Auslaufvorrichtung mit größerem Durchflußquerschnitt, deren Einlaßöffnung oberhalb der Scheitelhöhe 9 des Saughebers angeordnet ist.

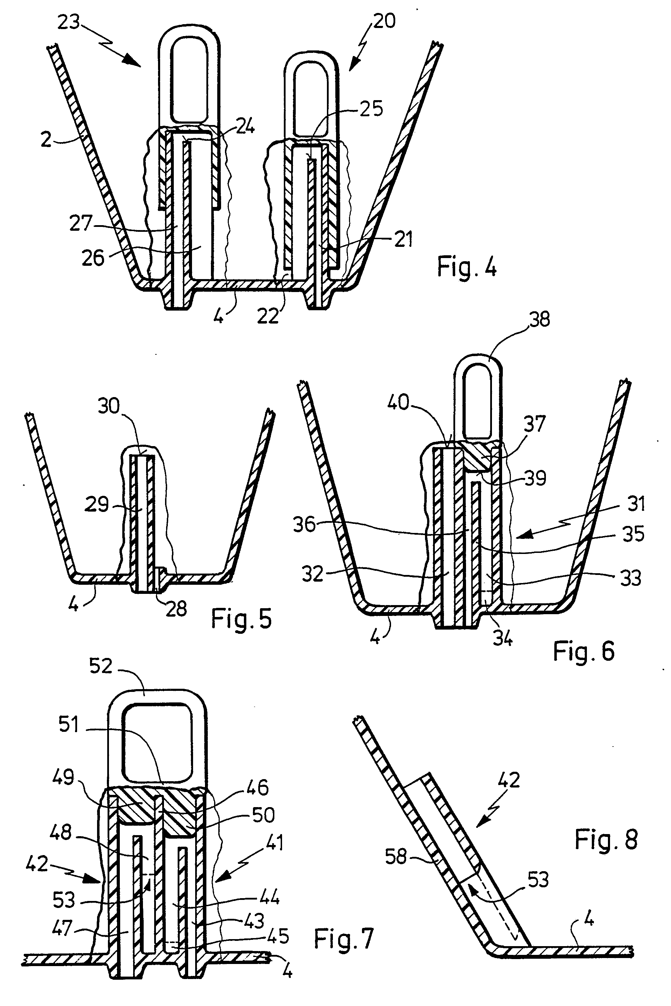

Bei der Ausführungsform nach Fig. 4 bildet der Saugheber 20 eine erste Ausflußvorrichtung mit einem engen Durchflußquerschnitt eines Rohres 21 und mit einer tiefen Einlaßöffnung 22. Der Saugheber 20 ist im wesentlichen gleich ausgebildet wie der Saugheber 7. Neben dem Saugheber 20 befindet sich eine zweite Ausflußvorrichtung 23, die ebenfalls als Saugheber ausgebildet ist. Die Scheitelhöhe 24 dieses Saughebers liegt höher als die Scheitelhöhe 25 des Saughebers 20 und die Einlaßöffnung 26 ist höher angeordnet als die Einlaßöffnung 22 des Saughebers 20. Das Rohr 21 und ein Rohr 27 der Saugheber 20, 23 sind durch den Boden 4 des Becherteiles 2 hindurchgeführt. Der Durchflußquerschnitt des Saughebers 23 ist wesentlich größer als der die Durchflußmenge bestimmende Durchflußquerschnitt des Rohres 21 des Saughebers 20.

Während in Fig. 4 die beiden Ausflußvorrichtung durch zwei Saugheber 20, 23 gebildet sind, sind die beiden Ausflußvorrichtungen bei der Ausführungsform nach Fig. 5 durch Rohrabschnitte gebildet. Ein kurzes Rohrstück 28 durchsetzt den Boden 4 und endet kurz über der Innenfläche des Bodens 34 Ein Überlaufrohr 29 bildet die zweite Auslaufvorrichtung, dessen obere Ringstirnfläche 30 einen größeren Abstand von dem oberen Rand der Durchflußöffnung 28 aufweist.

Die Ausführungsform nach Fig. 6 unterscheidet sich von der Ausführungsform nach den Fig. 1 bis 3 dadurch, daß eine als Saugheber ausgebildete erste Ausflußvorrichtung 31 mit einem Überlaufrohr 32 zusammengebaut ist. Ein rohrförmiges Teil 33 weist eine unmittelbar am Boden 4 oder knapp darüber befindliche Einlaßöffnung 34 auf. Das Rohr 33 ist durch eine Wand 35 von einem Kanal 36 getrennt, der durch den Boden 4 hindurchgeführt ist und unterhalb des Bodens endet. Das das Rohr 33 und den Kanal 36 enthaltende Teil ist durch einen Stopfen 37 mit Handgriff 38 oben abgeschlossen. Die innere Stirnseite 39 des Stopfens 37 befindet sich bei eingedrücktem Stopfen 37 in einem Abstand oberhalb dem oberen Ende der Zwischenwand 35, so daß die Flüssigkeit von dem Rohrstück 33 in den Kanal 36 strömen kann. Außen an dem das Rohr 33 und den Kanal 36 aufnehmenden Teil ist das Überlaufrohr 32 angeordnet, dessen oberes, eine Einlauföffnung 40 bildendes Ende deutlich höher liegt als das obere Ende der Scheidewand 35.

Die in Fig. 7 dargestellte Ausführungsform der Erfindung entspricht im Prinzip der Ausführungsform nach Fig. 4 mit dem Unterschied, daß die beiden Saugheber 41 und 42 zusammengebaut sind. Der Saugheber 41 weist einen durch den Becherboden 4 hindurchgeführten Kanal 43 auf, der einen kleinen, die Durchlaufmenge bestimmenden Querschnitt aufweist. Der mit dem Kanal 43 verbundene Kanal 44 weist an seinem unteren Ende eine Einlaßöffnung 45 auf, die in unmittelbarer Nähe des Bodens 4 angeordnet ist. Der Saugheber 41 ist durch eine Trennwand 46 von dem Saugheber 42 abgeteilt, dessen Kanal 47 wiederum durch den Boden 4 hindurchgeführt ist und dessen Querschnitt wesentlich größer ist als der die Durchlaufmenge bestimmende Querschnitt des Kanals 43 des Saughebers 41. Der die zweite Auslauföffnung darstellende Saugheber 42 weist noch einen Kanal 48 auf, der mit dem Kanal 47 verbunden ist. Jeweils einen Kanal abschließende Stopfen 49 und 50 sind zu einem gemeinsamen, eine Platte 51 aufweisenden Teil zusammengeschlossen, das einen Bügel 52 aufweist. Eine Einlaßöffnung 53 des Kanals 48 befindet sich in einem wesentlichen Abstand oberhalb des Boden 4. Die Trennwand zwischen den Kanälen 47 und 48 ist höher als die Trennwand zwischen den Kanälen 43 und 44.

Fig. 8 zweigt in einem vergrößerten Maßstab einen Saugheber 42 von der Seite gesehen ohne den Stopfan 49. Die Zwischenwände zwischen den Kanälen sind an eine Außenwand 58 des trichterförmigen Teiles angespritzt.

eine oder beide Ausflußvorrichtungen können auch außen an der Becherwand angeordnet sein. Die Einlaßöffnungen sind dann durch Aussparungen in der Behälterwand gebildet.

## Ansprüche

1. Filterbecher mit zwei Ausflußvorrichtungen, dadurch gekennzeichnet, daß eine erste Ausflußvorrichtung (7; 20; 28; 31; 41) eine Einlaßöffnung (15, 22, 34, 45) in unmittelbarer Nähe des Becherbodens (4) aufweist und daß die zweite Ausflußvorrichtung (17; 23; 30; 32; 42) einen größeren Durchflußquerschnitt als die erste Ausflußvorrichtung und eine Einlaßöffnung (30, 40, 53) in einem Abstand oberhalb der Einlaßöffnung (15, 22, 34, 45) der ersten Ausflußvorrichtung aufweist, wobei der Durchflußquerschnitt der ersten Ausflußvorrichtung so klein ist, daß sich die Flüssigkeitssäule zwischen Filterpapier und Behälterwand so langsam absenkt, daß die Flüssigkeitssäule im Filterpapier bei bestimmter minimaler Kaffeemenge eine hinreichend lange Zeit mit dem Kaffeemehl in Berührung bleibt.

2. Filterbecher nach Anspruch 1, dadurch gekennzeichnet, daß die Einlauföffnung (30) der zweiten Ausflußvorrichtung (29) oberhalb der Höhe über dem Becherboden (4) angeordnet ist, die der Flüssigkeitsspiegel beim Aufbrühen von etwa zwei Tassen Kaffee im Filterbecher maximal einnimmt.

3. Filterbecher nach Anspruch 1 oder 2, dadurch gekennzeichnet, daß der wirksame Querschnitt der beiden Ausflußvorrichtungen zusammen so groß ist, daß er bei vollem Filterbecher eine der Menge des zuströmenden Kaffeewassers entsprechende Menge Kaffee abführt.

4. Filterbecher nach einem der vorhergehenden Ansprüche, dadurch gekennzeichnet, daß die erste Ausflußvorrichtung in an sich bekannter Weise aus einer Öffnung (28) im Filterboden besteht.

5. Filterbecher nach einem der Ansprüche 1 bis 3, dadurch gekennzeichnet, daß die erste Ausflußvorrichtung in an sich bekannter Weise aus einem Saugheber (7, 20, 31, 41) besteht.

6. Filterbecher nach einem der vorhergehenden Ansprüche, dadurch gekennzeichnet, daß die zweite Ausflußvorrichtung aus einem Überlaufrohr (17, 29, 32) besteht.

7. Filterbecher nach einem der Ansprüche 1 bis 5, dadurch gekennzeichnet, daß die zweite Ausflußvorrichtung aus einem Saugheber (23, 42) besteht.

8. Filterbecher nach einem der vorhergehenden Ansprüche, dadurch gekennzeichnet, daß an der Becherwand eine Röhre (8) vorgesehen ist, die durch den Becherboden (4) hindurchragt und die an ihrer Außenwand ein U-förmiges Teil mit abstehenden Schenkeln (11) aufweist, und daß diese Schenkel (11) durch eine über die Röhre (8) geschobene Haube (12) zu einem Rohr ergänzt sind, die die obere Öffnung (9) der Röhre (8) mit Abstand übergreift und deren unteres Ende eine Einlaßöffnung (15) begrenzt oder aufweist.

9. Filterbecher nach Anspruch 8, dadurch gekennzeichnet, daß die Haube (12) abziehbar auf der Röhre (8) angeordnet ist.

10. Filterbecher nach Anspruch 8 oder 9, dadurch gekennzeichnet, daß die Haube (12) oben einen Griff (16) aufweist.

11. Filterbecher nach einem der vorhergehenden Ansprüche, gekennzeichnet, daß mindestens eine Ausflußvorrichtung außen an der Behälterwand angeordnet ist.

Fig.1

Fig.2

Fig. 3

Fig. 4

Fig. 5

Fig. 6

Fig. 8

Fig. 7

Europäisches Patentamt

**EUROPÄISCHER RECHERCHENBERICHT**

Nummer der Anmeldung

EP 88 11 7814

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3603718 (ROBERT KRUPS STIFTUNG & CO)<br>* das ganze Dokument * | 1-6 | A47J31/06 |
| Y | | 11 | |
| A | | 8-10 | |
| | --- | | |
| Y | EP-A-115556 (PETRA ELECTRIC P. HOHLFELDT)<br>* Seite 4, Zeile 9 - Seite 5, Zeile 31; Figuren 1-7 * | 11 | |
| | --- | | |
| X | US-A-3320073 (BIXBY)<br>* das ganze Dokument * | 1-6 | |
| | --- | | |
| X | DE-C-718859 (MELITTA WERKE BENTZ & SOHN)<br>* das ganze Dokument * | 1-4 | |
| | --- | | |
| X | DE-A-2829775 (KAMSTRUP-LARSEN)<br>* Seite 4, Zeile 1 - Seite 5, Zeile 10; Figuren 1, 2 * | 1-4,6 | |
| | ----- | | |

**RECHERCHIERTE SACHGEBIETE (Int. Cl.4)**

A47J

Der vorliegende Recherchenbericht wurde für alle Patentansprüche erstellt

| Recherchenort | Abschlußdatum der Recherche | Prüfer |
|---|---|---|
| DEN HAAG | 2 FEBRUAR 1989 | MEINDERS H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..................................................................
& : Mitglied der gleichen Patentfamilie, übereinstimmendes Dokument

EPO FORM 1503 03.82 (P0403)